# EUROPEAN PATENT SPECIFICATION

(11) **EP 4 535 536 B1**
(45) Date of publication and mention of the grant of the patent: **12.08.2026**
(21) Application number: 23845107.4
(22) Date of filing: 07.06.2023
(51) Int. Cl.: H01M 10/613, H01M 10/6235, H01M 10/643, H01M 10/653, H01M 10/655, H01M 10/6551, H01M 10/658, H01M 10/659, H01M 50/213, H01M 50/244, H01M 50/247, B25F 5/00

(54) **BATTERY PACK**
BATTERIEPACK
BLOC-BATTERIE

(30) Priority: 29.07.2022 CN 202210909033; 19.05.2023 CN 202310569043; 31.05.2023 CN 202310639129
(43) Date of publication of application: 09.04.2025
(73) Proprietor: Nanjing Chervon Industry Co., Ltd., Nanjing, Jiangsu 211106 (CN)
(72) Inventor: HAO, Jingdong, Nanjing, Jiangsu 211106 (CN); LI, Guolong, Nanjing, Jiangsu 211106 (CN); TONG, Shubin, Nanjing, Jiangsu 211106 (CN); YANG, Qingsong, Nanjing, Jiangsu 211106 (CN)
(74) Representative: Sun, Yiming
(86) International application number: PCT/CN2023/098889
(87) International publication number: WO 2024/021894

(56) References cited:
- WO-A1-2018/103305
- WO-A1-2018/103305
- WO-A1-2018/103306
- WO-A1-2018/103306
- CN-A- 109 994 789
- CN-A- 113 067 081
- CN-A- 113 506 935
- US-A1- 2010 028 758
- US-A1- 2022 123 412

## Description

### TECHNICAL FIELD

The present application belongs to the field of battery packs.

### BACKGROUND

The battery pack generates heat during the charging and discharging process, causing the temperature of the battery pack to rise and affecting the service life of the battery pack. The battery pack in the related art includes cells and a phase-change material covering the cells. During the discharging process of the battery pack, the phase-change material undergoes a phase change, thereby absorbing the heat released by the cells. However, the phase-change material in the battery pack in the related art is prone to leakage during a phase change, reducing the heat absorption effect, contaminating the battery pack, and affecting the service life of the battery pack. Therefore, the phase-change material needs to be sealed during the production of the battery pack, making the manufacturing process complicated and costly.

WO 2018/103305 A1 describes a thermal management material and applications thereof in a thermal management module of a cylindrical battery. WO 2018/103306 A1 describes a thermal management module for use in a square battery. US 2022/123412 A1 describes a battery pack including features for addressing overheating.

### SUMMARY

The present invention is defined by the independent claim. Advantageous embodiments are described in the dependent claims, the following description and the drawings. The present invention provides a battery pack that can effectively suppress the temperature rise and has stable performance at high temperatures.

To achieve the preceding object, the present invention adopts the technical solutions below. A battery pack inter alia includes a housing; a cell assembly disposed in the housing and including multiple cell units; and a heat absorber in thermal contact with at least one cell unit to absorb the heat generated by the cell assembly during a charging and discharging process of the battery pack.

The heat absorber contains at least paraffin wax, and mass of the paraffin wax accounts for 70% to 90% of mass of the heat absorber. The heat absorber further comprises a shaping component, the shaping component comprises a colloidal material, and the paraffin wax and the colloidal material are mixed to form a paraffin wax mixture. A mass of the colloidal material accounts for 1% to 5% of the mass of the paraffin wax mixture.

In some examples, the shaping component includes a colloidal material, and the paraffin wax that has undergone a hydrophilic treatment and the colloidal material are mixed and then dehydrated to form a paraffin wax mixture.

In some examples, in the paraffin wax mixture, the mass of the paraffin wax accounts for 95% to 99% of the mass of the paraffin wax mixture.

In some examples, the colloidal material includes water-soluble silica sol.

In some examples, the heat absorber further includes a thermally conductive component and a flame retardant component.

In some examples, the thermally conductive component includes expandable graphite, and the flame retardant component includes at least one of aluminum hydroxide, magnesium hydroxide, ammonium polyphosphate, melamine cyanurate, and zinc borate.

In some examples, in the heat absorber, the ratio of the mass of the paraffin wax to the mass of the heat absorber is greater than or equal to 0.7 and less than or equal to 0.85.

In some examples, the density of the heat absorber is greater than or equal to 0.8 g/cm³ and less than or equal to 0.95 g/cm³.

In some examples, the heat absorber is filled in at least gaps between the multiple cell units, and the heat absorber is capable of undergoing a phase change reaction when absorbing the heat generated by the cell assembly.

In some examples, the structure of the heat absorber includes at least one of a frame structure, an annular structure, or a sheet structure.

In some examples, the battery pack is suitable for supplying power to a power tool or an illumination device.

### BRIEF DESCRIPTION OF DRAWINGS

FIG. 1 is a perspective view of a power tool as a specific example of the present application.
FIG. 2 is a perspective view of a power tool as another specific example of the present application.
FIG. 3 is a perspective view of a battery pack as a specific example of the present application.
FIG. 4 is an exploded view of the battery pack shown in FIG. 3.
FIG. 5 is a perspective view of a heat absorber of the battery pack shown in FIG. 3 as a specific example.
FIG. 6 is a perspective view of heat absorbers of the battery pack shown in FIG. 3 as another specific example.
FIG. 7 is a schematic diagram of the maximum heat dissipation region of a cell unit in FIG. 6.
FIG. 8 is a view illustrating the positional relationship between cell units and heat absorbers of a battery pack as another specific example of the present application.
FIG. 9 is a chart illustrating the test analysis data of a heat absorber of the present application.
FIG. 10 is a test analysis graph of a heat absorber of the present application through differential scanning calorimetry (DSC).
FIG. 11 is a graph illustrating temperature rise curves of battery packs using heat absorbers of the present application and battery packs using common heat absorbers.
FIG. 12 is a perspective view of an illumination device as a specific example of the present application.

### DETAILED DESCRIPTION

In the description of the present application, the terms "joined", "connected", and "fixed" are to be understood in a broad sense unless otherwise expressly specified and limited. For example, the term "connected" may refer to "fixedly connected", "detachably connected", or "integrated"; may refer to "mechanically connected" or "electrically connected"; or may refer to "connected directly", "connected indirectly through an intermediary", "connected inside two components", or an interaction relation between two components. For those of ordinary skill in the art, meanings of the preceding terms in the present application may be understood based on situations.

In the present application, unless otherwise expressly specified and limited, when a first feature is described as "on" or "below" a second feature, the first feature and the second feature may be in direct contact or be in contact via another feature between the two features instead of being in direct contact. Moreover, when the first feature is described as "on", "above", or "over" the second feature, the first feature is right on, above, or over the second feature, the first feature is obliquely on, above, or over the second feature, or the first feature is simply at a higher level than the second feature. When the first feature is described as "under", "below", or "underneath" the second feature, the first feature is right under, below, or underneath the second feature, the first feature is obliquely under, below, or underneath the second feature, or the first feature is simply at a lower level than the second feature.

It is to be understood by those of ordinary skill in the art that a relative term (such as "about", "approximately", "substantially", and "basically") used in conjunction with a quantity or a condition includes the stated value and has a meaning indicated by the context (for example, the term includes at least a degree of error associated with the measurement of a particular value, a tolerance (such as manufacturing, assembly, and use) associated with the particular value, and the like). Such a relative term should also be considered as disclosing the range defined by the absolute values of the two endpoints. The relative term may refer to an indicated value increased or reduced by a certain percentage (such as 1%, 5%, 10% or more). Of course, a value not modified by a relative term should also be understood as a particular value with a tolerance.

The present application provides a battery pack. In the battery pack, the property of paraffin wax being insoluble in water is utilized, the paraffin wax is modified through emulsification to change the oily property and better blend with water-soluble materials, and polyethylene glycol (PEG) in the phase-change material in the related art is replaced with the paraffin wax, thereby eliminating the property of the raw materials being easily soluble in water and avoiding leakage and loss of materials in a humid environment. The battery pack of the present application may be suitable for a handheld power tool such as an electric drill, an electric wrench, an electric screwdriver, an electric hammer drill, or an electric circular saw, a garden tool such as an electric mower, a snow thrower, a string trimmer, electric shears, a hedge trimmer, or a chainsaw, or a manned electrical device such as an all-terrain vehicle or an electric motorcycle. For ease of description, these handheld power tools, garden tools, and manned electrical devices are collectively referred to as power tools below. The preceding power tools include battery packs provided in the present application and are driven by the battery packs. Apparently, the battery packs of the present application are not limited to being suitable for the preceding power tools.

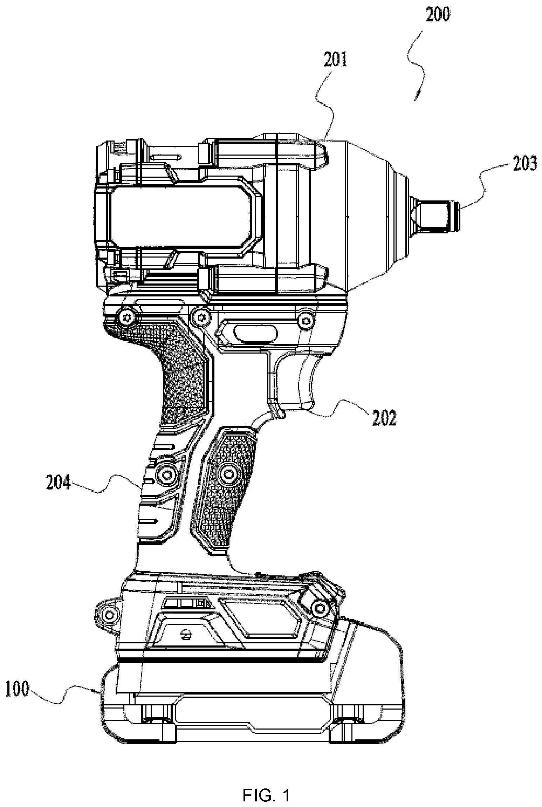

FIG. 1 shows a power tool as a specific example of the present application. For example, the power tool is a torque output tool. A torque output tool 200 is powered by a battery pack 100. The torque output tool 200 includes a housing 201, a motor, a gearbox assembly, a switch 202, and an output shaft 203. The housing 201 is configured to accommodate various components in the torque output tool and may include a handle portion 204 and an accommodation portion. The handle portion 204 is provided for the user to hold, and the accommodation portion forms an accommodation space for accommodating various components. The switch 202 may be mounted on the handle portion 204. When the user holds the handle portion, it is relatively convenient to trigger the switch, and the switch may be configured to be a main trigger for starting the torque output tool.

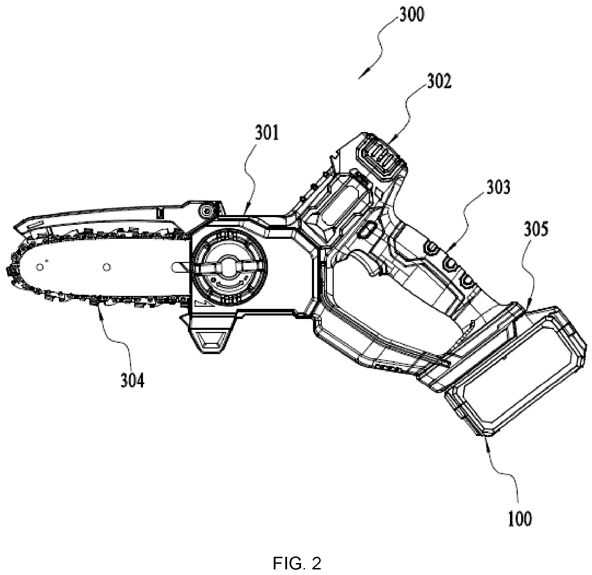

FIG. 2 shows a power tool as another specific example of the present application. Optionally, the power tool is a cutting tool. A cutting tool 300 is powered by the battery pack 100. The battery pack 100 is detachably connected to the power tool. The cutting tool 300 includes a main housing portion 301 formed with or connected to a motor housing portion 302, and the motor housing portion 302 is formed with or connected to a handle 303. The handle 303 is provided for an operator to hold, and the battery pack 100 is detachably connected to an end of the handle 303. A cutting device 304 is supported by the main housing portion 301. The motor drives the cutting device 304 to operate, thereby implementing the cutting function of the cutting tool. Optionally, the cutting tool 300 is formed with a tool coupling portion 305 for connecting the battery pack 100, and the tool coupling portion 305 is used to match the battery coupling portion 110 of the battery pack 100. After the battery pack 100 is mounted on the cutting tool 300, the battery pack 100 and the cutting tool 20 can form an electric circuit through an electrical terminal 120. After the battery pack is mounted on the power tool, the electrical energy in the battery pack is transmitted to the power tool through the electrical terminal 120, thereby supplying electrical energy to the power tool.

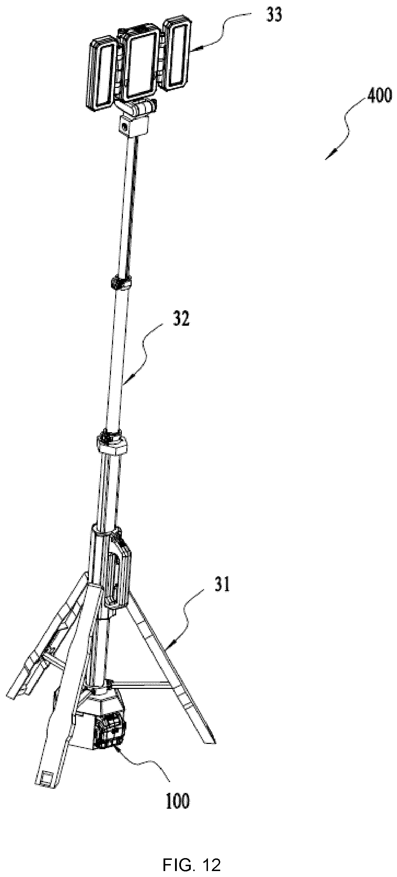

FIG. 12 shows an illumination device as a specific example of the present application. Optionally, an illumination device 400 is powered by the battery pack 100. The illumination device 400 includes a base 31, a lifting mechanism 32, and an illumination assembly 33. The lifting mechanism 32 is rotatably connected to the base 31. The body portion of the lifting mechanism 32 is a telescopic rod assembly. The base 31 further includes a power supply connecting portion. The power supply connecting portion includes a battery accommodation cavity for accommodating the battery pack 100. A battery entrance of the battery accommodation cavity is disposed on a side surface of the base 31.

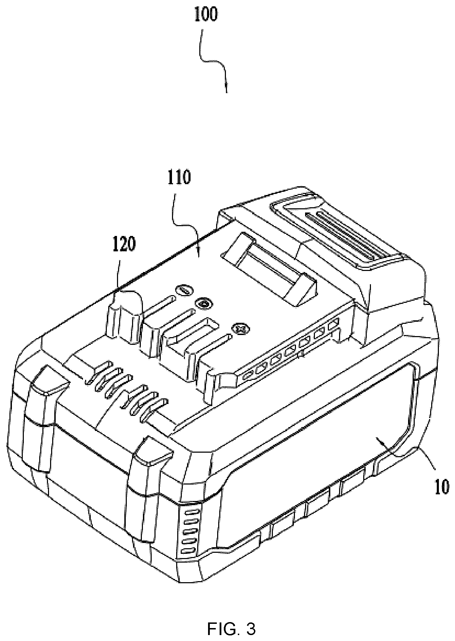

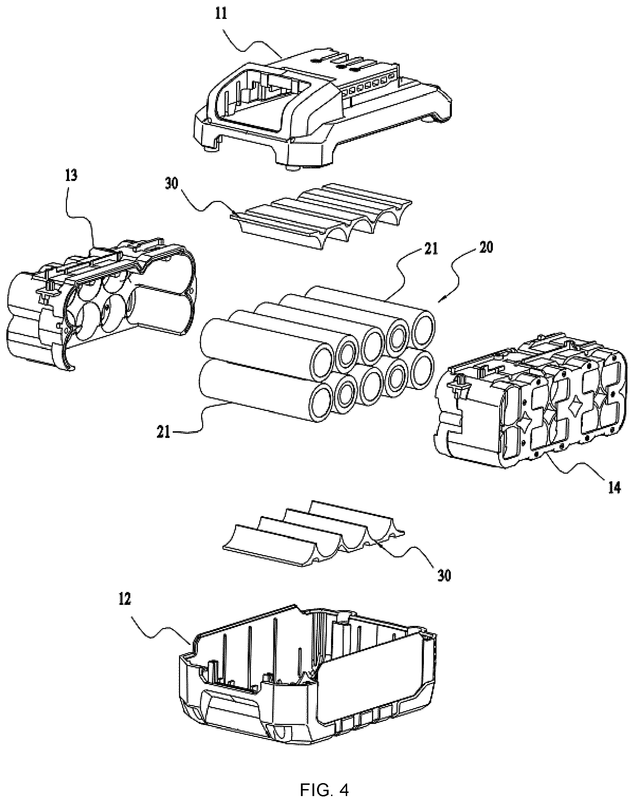

FIG. 3 shows the battery pack 100 as a specific example of the present application. Optionally, referring to FIGS. 3 to 5, the battery pack 100 includes a housing 10 and a cell assembly 20 disposed in the housing 10. The housing 10 includes an upper housing 11, a lower housing 12, a left housing 13, and a right housing 14. The cell assembly 20 includes multiple cell units 21. The battery pack 100 further includes a heat absorber 30 for absorbing the heat generated by the cell assembly 20 during the charging and discharging process. The heat absorber 30 is in thermal contact with at least one cell unit 21. In some examples, the heat absorber 30 fits at least one cell unit 21 to absorb the heat generated by the cell assembly 20 during the charging and discharging process.

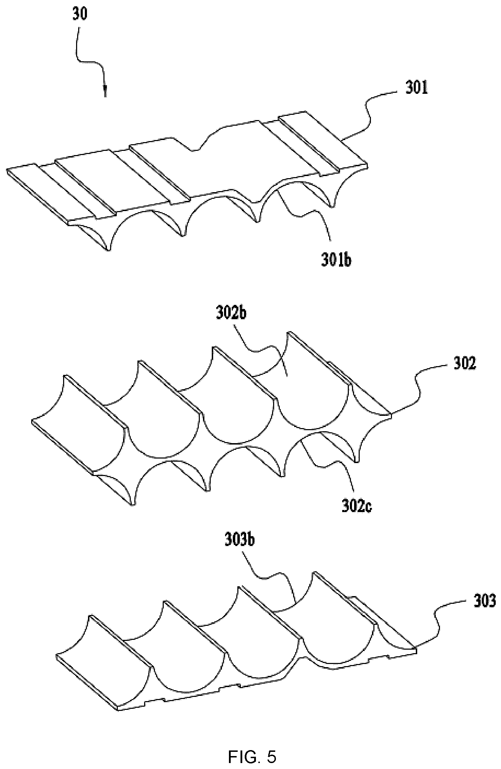

In some examples, as shown in FIG. 5, the heat absorber 30 includes a first support member 301 located on the upper side of the cell assembly 20, a second support member 302 located in the cell assembly 20, and a third support member 303 located on the lower side of the cell assembly 20. Optionally, the first support member 301 and the second support member 302 can be spliced together to form through holes through which the cell units 21 pass. The second support member 302 and the third support member 303 can be spliced together to form through holes through which the cell units 21 pass.

Optionally, first grooves 301b and second grooves 302b are provided on opposite sides of the first support member 301 and the second support member 302, respectively. The first groove 301b and the second groove 302b fit the cell unit 21, thereby quickly dissipating heat for the cell unit 21. Third grooves 303b and fourth grooves 302c are provided on opposite sides of the third support member 303 and the second support member 302, respectively. The third groove 303b and the fourth groove 302c fit the cell unit 21, thereby quickly dissipating heat for the cell unit 21.

In some examples, the structure of the heat absorber 30 is a frame structure. The heat absorber 30 has through holes for the cell units 21 to pass through. It is to be understood that the heat absorber 30 is configured to be an integral frame on which the through holes are formed. The preceding through hole may be configured to accommodate the cell unit 21 so that the cell unit 21 can pass through the through hole. In this manner, the heat absorber 30 fits the surfaces of the cell units 21. At the same time, the heat absorber 30 can fix and support the cell units 21, thereby preventing the cell units 21 from moving in the housing 10. Optionally, multiple through holes are provided, and the number of through holes should correspond to the number of cell units 21.

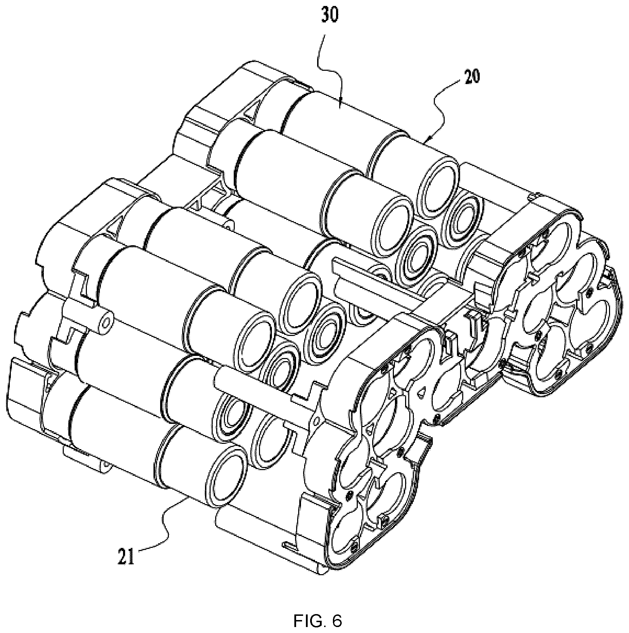

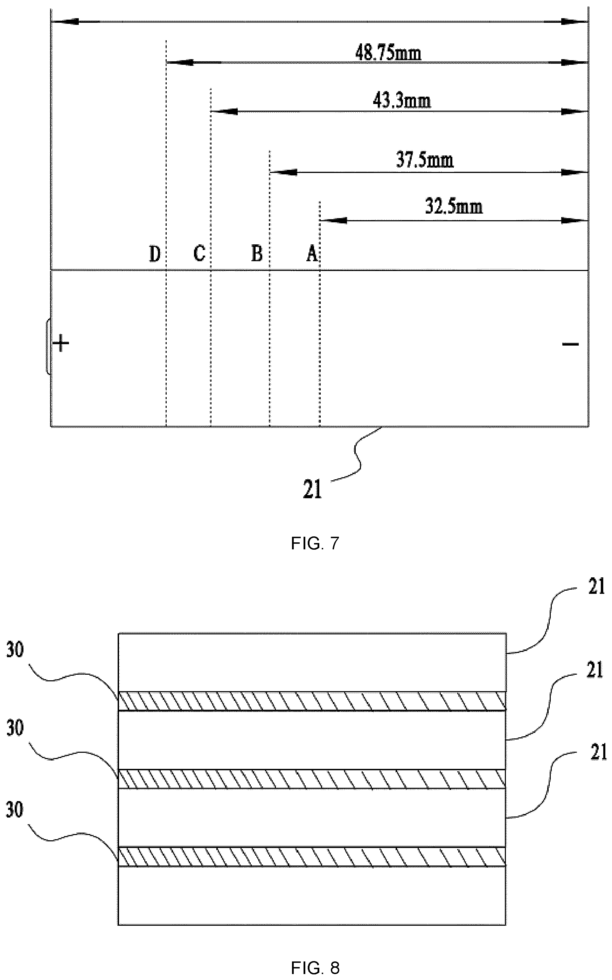

In some examples, as shown in FIG. 6, the structure of the heat absorber 30 is an annular structure, and the annular structure is sleeved on the outer surface of the cell unit 21 to absorb the heat generated by the cell unit 21 during the charging and discharging process. Optionally, the heat absorber 30 is disposed in the maximum heat dissipation region of the cell unit 21. Optionally, as shown in FIG. 7, the length of the cell unit 21 is about 65 mm and the diameter is about 18 mm. The region where the temperature of the cell unit 21 rises most quickly during charging and discharging is located in the middle of the outer surface of the cell unit 21 and is 5 mm away from the positive terminal. A region defined by the middle position A (about 32.5 mm from the negative terminal) and the position B (about 37.5 mm from the negative terminal) that is on a side of the middle position A facing the positive terminal and is 5 mm away from the middle position A in the longitudinal direction of the cell unit 21 is a region where the temperature of the cell unit 21 rises most easily and quickly to the limit protection temperature. Therefore, in some examples, this region is configured to be the maximum heat dissipation region of the cell unit 21. The heat absorber 30 is sleeved on the cell unit 21 and covers the preceding maximum heat dissipation region. To achieve a more ideal heat dissipation effect, in some examples, the heat absorber 30 may be sleeved and mounted in a region defined by the middle position A (about 32.5 mm from the negative terminal) and the position C (about 43.3 mm from the negative terminal) that is on a side of the middle position A facing the positive terminal in the longitudinal direction of the cell unit 21, where two-thirds of the length of the entire cell unit 21 in the longitudinal direction is about 43.3 mm. Alternatively, the heat absorber 30 may be sleeved and mounted in a region defined by the middle position A (about 32.5 mm from the negative terminal) and the position D (about 48.75 mm from the negative terminal) that is on a side of the middle position A facing the positive terminal in the longitudinal direction of the cell unit 21, where three-fourths of the length of the entire cell unit 21 in the longitudinal direction is 48.75 mm. Each of the preceding regions is configured to be the maximum heat dissipation region of the cell unit 21. In this example, the heat absorber 30 is configured in an annular shape, the dimension of the annular structure may be adjusted according to the dimension and arrangement of the cell units 21, and the annular structure is sleeved and mounted on the cell unit 21 by tooling or in other manners.

In some examples, as shown in FIG. 8, the structure of the heat absorber 30 is a sheet structure, and the sheet structure is disposed between connected cell units 21, thereby quickly dissipating heat for the cell units 21. Optionally, one heat absorber 30 is disposed between adjacent cell units 21.

In this manner, the heat absorber 30 is filled in at least the gaps between the multiple cell units 21. The structure of the heat absorber 30 includes, but is not limited to, the frame structure, the annular structure, or the sheet structure. Optionally, in the present application, heat absorbers of different structures may be provided according to the types of batteries. For example, the cell unit 21 is cylindrical, the structure of the heat absorber 30 is the frame structure or the annular structure. The cell unit 21 has a long sheet structure, the structure of the heat absorber 30 is the sheet structure.

In the related art, the heat absorber includes paraffin wax and a shaping component formed into a porous structure, and the paraffin wax is filled in the pores of the porous structure to limit the leakage of the paraffin wax from the pores of the porous structure. However, due to the size of paraffin wax particles, the fit between the paraffin wax particles and gaps is not firm, and the paraffin wax particles may fall out of the gaps of the shaping component during the use of the battery pack, affecting the performance of the heat absorber and the normal use of the battery pack. In the present application, the paraffin wax is pre-treated and then mixed with a shaping material, a thermal conductor, and a flame retardant in a reasonable ratio to form the heat absorber configured to absorb the heat generated by the battery pack during the charging and discharging process.

Optionally, the heat absorber contains a phase-change component and a shaping component. The phase-change component may be paraffin wax. Paraffin wax is one of the important materials for storing heat and is a saturated hydrocarbon. Paraffin waxes with different molecular weights have similar chemical properties. Generally speaking, the longer the hydrocarbon chain, the higher the melting temperature. Paraffin wax has the characteristics of a high enthalpy change of solution, a variable phase-change temperature, self-nucleation, no phase segregation, low costs, non-corrosiveness, and low vapor pressure. The paraffin wax in the present application includes n-tetracosyl paraffin wax, n-pentacosyl paraffin wax, n-hexacosyl paraffin wax, and n-heptacosyl paraffin wax. The melting points of the preceding types of paraffin waxes range from 50°C to 60°C.

The mass of the paraffin wax accounts for 70% to 90% of the mass of the heat absorber. In some examples, the mass of the paraffin wax accounts for 75% to 90% of the mass of the heat absorber. In some examples, the mass of the paraffin wax accounts for 80% to 90% of the mass of the heat absorber. In some examples, the mass of the paraffin wax accounts for 70%, 72%, 74%, 76%, 78%, 80%, 82%, 84%, 86%, 88%, or 90% of the mass of the heat absorber.

The shaping component is configured to shape the paraffin wax so that the paraffin wax has a certain viscosity within the use temperature range, thereby reducing fluidity and avoiding leakage. In some examples, the shaping component may be a colloidal material. For example, the shaping component may be water-soluble silica sol.

In some examples, the paraffin wax is mixed directly with the shaping component. In some examples, paraffin wax is modified through emulsification to obtain water-soluble paraffin wax, and the water-soluble paraffin wax and the shaping component are mixed and then dehydrated to obtain a paraffin wax mixture.

The mass of the colloidal material accounts for 1% to 5% of the mass of the paraffin wax mixture. In some examples, in the paraffin wax mixture, the mass of the colloidal material accounts for 1% to 3% of the mass of the paraffin wax mixture. In some examples, in the paraffin wax mixture, the mass of the colloidal material accounts for 1%, 1.5%, 2%, 2.5%, 3%, 3.5%, 4%, 4.5%, or 5% of the mass of the paraffin wax mixture. In some examples in the paraffin wax mixture, the mass of the paraffin wax accounts for 95% to 99% of the mass of the paraffin wax mixture. In some examples in the paraffin wax mixture, the mass of the paraffin wax accounts for 96% to 98% of the mass of the paraffin wax mixture. In some examples in the paraffin wax mixture, the mass of the paraffin wax accounts for 95%, 95.5%, 96%, 96.5%, 97%, 97.5%, 98%, 98.5%, or 99% of the mass of the paraffin wax mixture.

In this manner, hydrophilic treatment is performed on paraffin wax, the paraffin wax and the shaping material are mixed, and then the preceding mixture is dehydrated to obtain the paraffin wax mixture. It is to be noted that the preceding paraffin wax mixture is insoluble in water and has phase change characteristics. Optionally, hydrophilic treatment may be understood as a process of mixing paraffin wax with an emulsifier to produce water-soluble paraffin wax. When the battery pack generates a large amount of heat during the charging and discharging process, the paraffin wax in the heat absorber undergoes a phase change reaction. During a phase change, paraffin wax can absorb the heat generated by the cell units, thereby reducing the temperature of the cell units. The paraffin wax and the shaping component in the preceding paraffin wax mixture are fully mixed, thereby preventing the paraffin wax from leaking from the shaping component during a phase change process. On the other hand, since the current paraffin wax is insoluble in water, the paraffin wax does not absorb moisture in the environment when undergoing a phase change reaction, thereby avoiding leakage.

In some examples, the ratio of the mass of the paraffin wax to the mass of the shaping material is greater than or equal to 0.2 and less than or equal to 0.9. In some examples, the ratio of the mass of the paraffin wax to the mass of the shaping material may be 0.2, 0.3, 0.4, 0.5, 0.6, 0.7, 0.8, or 0.9. For example, the shaping material is configured to limit leakage of the paraffin wax from within the shaping material. Optionally, the shaping material can accommodate the paraffin wax.

In some examples, the heat absorber further includes a thermally conductive component and a flame retardant component. Optionally, the thermally conductive component includes expandable graphite. The flame retardant component includes at least one of aluminum hydroxide, magnesium hydroxide, montmorillonite, ammonium polyphosphate, melamine cyanurate, and zinc borate.

In some examples, the heat absorber contains paraffin wax, colloidal material, expandable graphite, and aluminum hydroxide. Optionally, the ratio of the mass of the paraffin wax to the mass of the heat absorber is greater than or equal to 0.7 and less than or equal to 0.85. In some examples, the ratio of the mass of the paraffin wax to the mass of the heat absorber may be 0.7, 0.75, 0.8, 0.82, or 0.85. The ratio of the mass of the thermally conductive component to the mass of the heat absorber is greater than or equal to 0.05 and less than or equal to 0.07. In some examples, the ratio of the mass of the thermally conductive material to the mass of the heat absorber may be 0.05, 0.06, or 0.07. The ratio of the mass of the flame retardant component to the mass of the heat absorber is greater than or equal to 0.17 and less than or equal to 0.22. In some examples, the ratio of the mass of the flame retardant component to the mass of the heat absorber may be 0.17, 0.18, 0.19, 0.20, 0.21, or 0.22.

In some examples, the flame retardant component includes an acid source, a carbon source, and a gas source. The mass ratio of the acid source, the carbon source, and the gas source is 2:1:1. Optionally, the acid source includes ammonium polyphosphate or zinc borate. The carbon source includes pentaerythritol or the triazine carbon-forming agent. The gas source includes melamine or chlorinated paraffins. In some examples, the mass ratio of the acid source, the carbon source, and the gas source is 3:1:1.

In some examples, the flame retardant component includes a halogen flame retardant formulation, for example, a bromine antimony flame retardant (a blend of decabromodiphenyl ethane and antimony trioxide). The flame retardant effect of the halogen flame retardant formulation is better than that of the halogen-free flame retardant formulation, and the halogen flame retardant formulation can satisfy environmental protection requirements.

In some examples, the density of the heat absorber is greater than or equal to 0.8 g/cm³ and less than or equal to 0.95 g/cm³. In some examples, the density of the heat absorber is greater than or equal to 0.85 g/cm³ and less than or equal to 0.9 g/cm³.

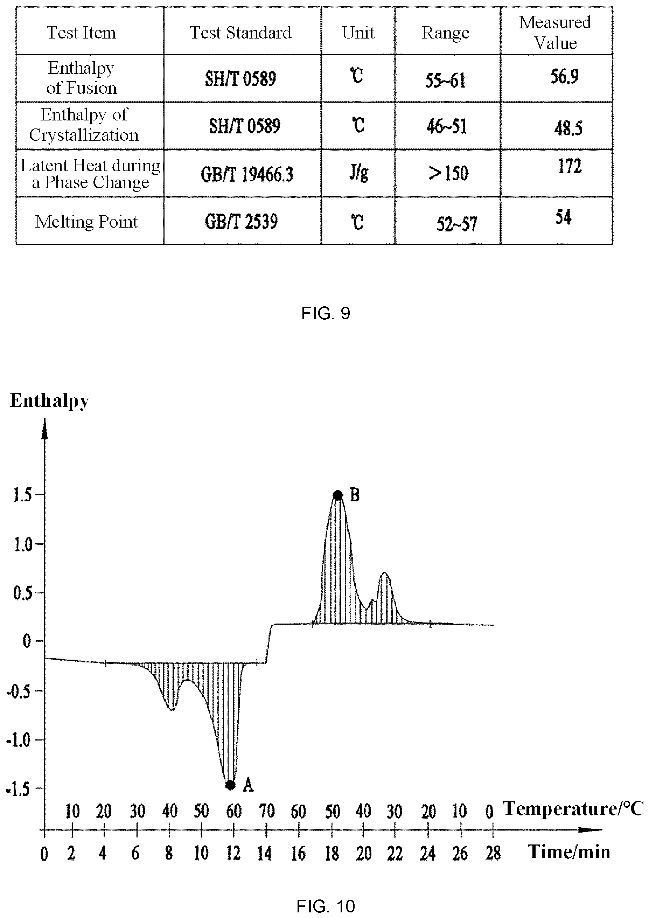

To verify the performance of the heat absorber as a specific example of the present application not falling under the scope of protection, a thermal analysis test is performed on 50 samples of the heat absorber. As shown in FIG. 9, the fusion value, the crystallization value, the latent heat during a phase change, and the melting point of the heat absorber are mainly tested in the test. Optionally, in this test, the samples are tested using the test standard of SH/T 0589, and the enthalpy of fusion of the heat absorber of the present application is greater than or equal to 55°C and less than or equal to 61°C. The samples are tested using the test standard of SH/T 0589, and the enthalpy of crystallization of the heat absorber of the present application is greater than or equal to 46°C and less than or equal to 51 °C. The samples are tested using the test standard of GB/T 19466.3, and the latent heat during a phase change of the heat absorber of the present application is greater than or equal to 150 J/g. The latent heat during a phase change refers to the heat absorbed or released when the heat absorber changes from one phase to another in isothermal and isobaric conditions. The samples are tested using the test standard of GB/T 2539, and the melting point of the heat absorber of the present application is greater than or equal to 52°C and less than or equal to 57°C. The melting point refers to the temperature at which the heat absorber undergoes a first-order phase change between solid and liquid. That is, when a solid substance reaches a certain temperature during the heating process, the solid substance begins to change from the solid state to the liquid state.

In some examples, the degree of subcooling of the heat absorber of the present application is greater than or equal to 4°C and less than or equal to 15°C. In some examples, the degree of subcooling of the heat absorber of the present application is greater than or equal to 5°C and less than or equal to 10°C. In some examples, the degree of subcooling of the absorber of the present application may be 4°C, 5°C, 6°C, 7°C, 8°C, 9°C, 10°C, 11°C, 12°C, 13°C, 14°C, or 15°C. Here, the degree of subcooling refers to a temperature difference between the fusion and the crystallization.

Optionally, FIG. 10 is a test analysis graph of a heat absorber of the present application through DSC. Optionally, the test data of the degree of subcooling of the heat absorber of the present application can be acquired from FIG. 10. Optionally, DSC is a common thermal analysis method. The method for testing the degree of subcooling in the present application is described below. The sample to be tested is subjected to multiple cycles of endothermic melting and exothermic crystallization so that the degree of subcooling of the heat absorber can be acquired. As can be seen from FIG. 10, in one test, the degree of subcooling of the heat absorber of the present application is the difference between the temperature at point A and the temperature at point B. Point A is the maximum point in the endothermic melting process, and point B is the maximum point in the exothermic crystallization process. Of course, the DSC curves of paraffin waxes with different molecular weights are not completely consistent.

It can be seen from the preceding tests that the heat absorber of the present application can be well applied to the battery pack.

In some examples, the volume of the heat absorber in the present application changes during a phase change process. Optionally, the volume rate of change of the heat absorber during a phase change process is greater than or equal to 8% and less than or equal to 12%. In some examples, the volume rate of change of the heat absorber during a phase change process is greater than or equal to 9% and less than or equal to 11%. In some examples, the volume rate of change of the heat absorber during a phase change process may be 9%, 10%., 11%, or 12%.

In some examples, the weight of the heat absorber in the present application changes after a phase change reaction. Optionally, the weight loss ratio of the heat absorber in the present application after undergoing at least one phase change reaction is greater than or equal to 0% and less than or equal to 2%. In some examples, the weight loss ratio of the heat absorber in the present application after undergoing at least one phase change reaction is greater than or equal to 0.5% and less than or equal to 1%. In some examples, the weight loss ratio of the heat absorber in the present application after undergoing at least one phase change reaction may be 0%, 0.5%, 1%, 1.5%, or 2%. It is to be noted that the process of testing the weight loss ratio of the preceding heat absorber is described below. A battery pack sample is disassembled, the heat absorber in the battery pack is taken out, part or all of the heat absorber is selected as the sample to be tested, and a weight loss ratio test is performed on the sample to be tested. The weight loss ratio is defined as the ratio of the difference between the initial weight of a test sample and the weight after the test to the initial weight. The weight of the sample to be tested after undergoing a phase change reaction does not exceed the initial weight. In some examples, the steps of testing the weight loss ratio are described below. The sample to be tested is subjected to 50 cycles of endothermic melting at an ambient temperature of 80°C for 30 minutes and exothermic crystallization at an ambient temperature of 0°C for 30 minutes.

In some examples, the heat absorber of the present application has better leak-proof performance. Optionally, after 500 charge and discharge cycles of the battery pack using the heat absorber of the present application, the heat absorber leaks.

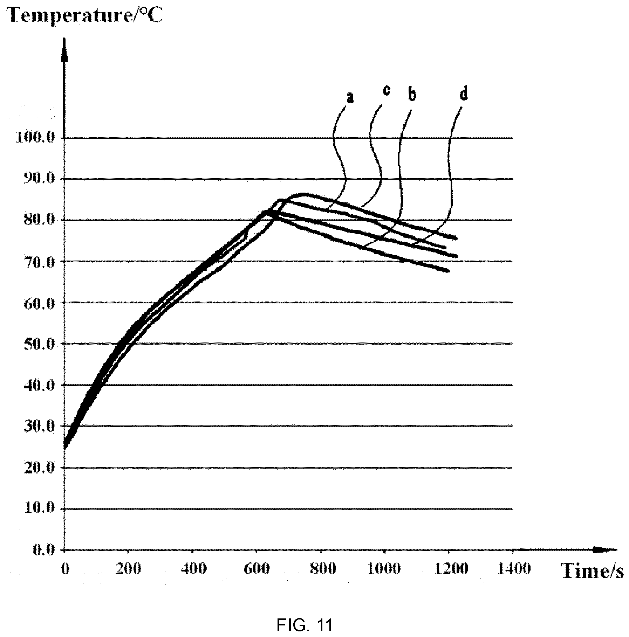

FIG. 11 shows the temperature rise curves of battery packs in the present application and the temperature rise curves of battery packs in the related art. A horizontal axis represents time and a vertical axis represents temperature. Curve a and curve b are the temperature rise curves of the battery packs in the present application. Curve c and curve d are the temperature rise curves of the battery packs using PEG materials. As can be seen from FIG. 11, on the one hand, the battery packs in the present application and the battery packs in the related art can well suppress the temperature rise during the charging and discharging process of the battery packs. On the other hand, in the battery packs in the present application, the paraffin wax is used and emulsified to change the oily property to better blend with water-soluble materials. In this manner, while the temperature rise can be effectively suppressed, material leakage can be avoided; and while the service life of the battery packs can be extended, the battery packs can have stable output performance during use.

In some examples, the heat absorber mainly formed by paraffin wax can also be suitable for the heat dissipation of circuit board assemblies in the field of power tools. A circuit board assembly includes a box body and a printed circuit board disposed in the box body and provided with multiple electronic components. Optionally, the preceding heat absorber containing paraffin wax is injected into the box body by means of pouring. Optionally, the solidified shape of the heat absorber is reasonably designed according to the actual space so that the heat absorber can be mounted near the printed circuit board or the box body.

## Claims

1. A battery pack (100) applicable to a handheld power tool (10), comprising:
a housing (10);
a cell assembly (20) disposed in the housing and comprising a plurality of cell units (21); and
a heat absorber (30) in thermal contact with at least one of the plurality of cell units to absorb heat generated by the cell assembly during a charging and discharging process of the battery pack;
wherein the heat absorber contains at least paraffin wax, and mass of the paraffin wax accounts for 70% to 90% of mass of the heat absorber,
wherein the heat absorber further comprises a shaping component, the shaping component comprises a colloidal material, and the paraffin wax and the colloidal material are mixed to form a paraffin wax mixture,
wherein a mass of the colloidal material accounts for 1% to 5% of the mass of the paraffin wax mixture.

2. The battery pack of claim 1, wherein the mass of the paraffin wax accounts for 75% to 90% of the mass of the heat absorber.

3. The battery pack of claim 1, wherein in the paraffin wax mixture, the mass of the paraffin wax accounts for 95% to 99% of mass of the paraffin wax mixture.

4. The battery pack of claim 1, wherein the colloidal material comprises water-soluble silica sol.

5. The battery pack of claim 1, wherein the heat absorber further comprises a thermally conductive component and a flame retardant component.

6. The battery pack of claim 5, wherein the thermally conductive component comprises expandable graphite, and the flame retardant component comprises at least one of aluminum hydroxide, magnesium hydroxide, ammonium polyphosphate, melamine cyanurate, and zinc borate.

7. The battery pack of claim 1, wherein a density of the heat absorber is greater than or equal to 0.8 g/cm³ and less than or equal to 0.95 g/cm³.

8. The battery pack of claim 1, wherein the heat absorber is capable of undergoing a phase change reaction, and a weight loss ratio of the heat absorber after undergoing at least one phase change reaction is greater than 0% and less than or equal to 2%.

9. The battery pack of claim 1, wherein the heat absorber is filled in at least gaps between the plurality of cell units, and the heat absorber is capable of undergoing a phase change reaction when absorbing the heat generated by the cell assembly.

10. The battery pack of claim 1, wherein a shape of the heat absorber is at least one of a frame structure, an annular structure, or a sheet structure.

11. The battery pack of claim 1, wherein the battery pack is configured to be detachably connected to the handheld power tool.

12. The battery pack of claim 1, wherein the paraffin wax is modified through emulsification to obtain a water-soluble paraffin wax, and the water-soluble paraffin wax and the shaping component are mixed and then dehydrated to obtain the paraffin wax mixture.

## Patentansprüche

1. Ein Akkupack (100) für ein handgeführtes Elektrowerkzeug (10), umfassend:
ein Gehäuse (10);
eine Zellenanordnung (20), die in dem Gehäuse angeordnet ist und eine Mehrzahl von Zelleneinheiten (21) umfasst; und
einen Wärmeabsorber (30), der mit mindestens einer der Mehrzahl von Zelleneinheiten in thermischem Kontakt steht, um Wärme zu absorbieren, die durch die Zellenanordnung während eines Lade- und Entladevorgangs des Akkupacks erzeugt wird;
wobei der Wärmeabsorber mindestens Paraffinwachs enthält, und eine Masse des Paraffinwachses 70 % bis 90 % der Masse des Wärmeabsorbers ausmacht,
wobei der Wärmeabsorber ferner eine Formgebungskomponente umfasst, die Formgebungskomponente ein kolloidales Material umfasst, und das Paraffinwachs und das kolloidale Material gemischt werden, um eine Paraffinwachsmischung zu bilden,
wobei eine Masse des kolloidalen Materials 1 % bis 5 % der Masse der Paraffinwachsmischung ausmacht.

2. Der Akkupack nach Anspruch 1, wobei die Masse des Paraffinwachses 75 % bis 90 % der Masse des Wärmeabsorbers ausmacht.

3. Der Akkupack nach Anspruch 1, wobei in der Paraffinwachsmischung die Masse des Paraffinwachses 95 % bis 99 % der Masse der Paraffinwachsmischung ausmacht.

4. Der Akkupack nach Anspruch 1, wobei das kolloidale Material wasserlösliches Kieselsol umfasst.

5. Der Akkupack nach Anspruch 1, wobei der Wärmeabsorber ferner eine wärmeleitende Komponente und eine flammhemmende Komponente umfasst.

6. Der Akkupack nach Anspruch 5, wobei die wärmeleitende Komponente expandierbaren Graphit umfasst, und die flammhemmende Komponente mindestens eines von Aluminiumhydroxid, Magnesiumhydroxid, Ammoniumpolyphosphat, Melamincyanurat und Zinkborat umfasst.

7. Der Akkupack nach Anspruch 1, wobei eine Dichte des Wärmeabsorbers größer als oder gleich 0,8 g/cm³ und kleiner als oder gleich 0,95 g/cm³ ist.

8. Der Akkupack nach Anspruch 1, wobei der Wärmeabsorber in der Lage ist, eine Phasenwechselreaktion zu durchlaufen, und ein Massenverlustverhältnis des Wärmeabsorbers, nachdem er mindestens eine Phasenwechselreaktion durchlaufen hat, größer als 0 % und kleiner als oder gleich 2 % ist.

9. Der Akkupack nach Anspruch 1, wobei der Wärmeabsorber zumindest in Zwischenräume zwischen der Mehrzahl von Zelleneinheiten eingefüllt ist, und der Wärmeabsorber in der Lage ist, eine Phasenwechselreaktion zu durchlaufen, wenn er die durch die Zellenanordnung erzeugte Wärme absorbiert.

10. Der Akkupack nach Anspruch 1, wobei eine Form des Wärmeabsorbers mindestens eine von einer Rahmenstruktur, einer ringförmigen Struktur oder einer Struktur in Blattform ist.

11. Der Akkupack nach Anspruch 1, wobei der Akkupack dazu ausgebildet ist, lösbar mit dem handgeführten Elektrowerkzeug verbunden zu werden.

12. Der Akkupack nach Anspruch 1, wobei das Paraffinwachs durch Emulgierung modifiziert wird, um ein wasserlösliches Paraffinwachs zu erhalten, und das wasserlösliche Paraffinwachs und die Formgebungskomponente gemischt und dann entwässert werden, um die Paraffinwachsmischung zu erhalten.

## Revendications

1. Un bloc-batterie (100) applicable à un outil électrique portatif (10), comprenant :
un boîtier (10) ;
un ensemble de cellules (20) disposé dans le boîtier et comprenant une pluralité d'unités de cellule (21) ; et
un absorbeur de chaleur (30) en contact thermique avec au moins l'une de la pluralité d'unités de cellule pour absorber de la chaleur générée par l'ensemble de cellules pendant un processus de charge et de décharge du bloc-batterie ;
dans lequel l'absorbeur de chaleur contient au moins de la cire de paraffine, et une masse de la cire de paraffine représente de 70 % à 90 % de la masse de l'absorbeur de chaleur,
dans lequel l'absorbeur de chaleur comprend en outre un composant de mise en forme, le composant de mise en forme comprenant un matériau colloïdal, et la cire de paraffine et le matériau colloïdal étant mélangés pour former un mélange de cire de paraffine,
dans lequel une masse du matériau colloïdal représente de 1 % à 5 % de la masse du mélange de cire de paraffine.

2. Le bloc-batterie selon la revendication 1, dans lequel la masse de la cire de paraffine représente de 75 % à 90 % de la masse de l'absorbeur de chaleur.

3. Le bloc-batterie selon la revendication 1, dans lequel, dans le mélange de cire de paraffine, la masse de la cire de paraffine représente de 95 % à 99 % de la masse du mélange de cire de paraffine.

4. Le bloc-batterie selon la revendication 1, dans lequel le matériau colloïdal comprend un sol de silice hydrosoluble.

5. Le bloc-batterie selon la revendication 1, dans lequel l'absorbeur de chaleur comprend en outre un composant thermoconducteur et un composant retardateur de flamme.

6. Le bloc-batterie selon la revendication 5, dans lequel le composant thermoconducteur comprend du graphite expansible, et le composant retardateur de flamme comprend au moins l'un parmi l'hydroxyde d'aluminium, l'hydroxyde de magnésium, le polyphosphate d'ammonium, le cyanurate de mélamine et le borate de zinc.

7. Le bloc-batterie selon la revendication 1, dans lequel une densité de l'absorbeur de chaleur est supérieure ou égale à 0,8 g/cm³ et inférieure ou égale à 0,95 g/cm³.

8. Le bloc-batterie selon la revendication 1, dans lequel l'absorbeur de chaleur est apte à subir une réaction de changement de phase, et un taux de perte de masse de l'absorbeur de chaleur après avoir subi au moins une réaction de changement de phase est supérieur à 0 % et inférieur ou égal à 2 %.

9. Le bloc-batterie selon la revendication 1, dans lequel l'absorbeur de chaleur est rempli au moins dans des espaces entre la pluralité d'unités de cellule, et l'absorbeur de chaleur est apte à subir une réaction de changement de phase lorsqu'il absorbe la chaleur générée par l'ensemble de cellules.

10. Le bloc-batterie selon la revendication 1, dans lequel une forme de l'absorbeur de chaleur est au moins l'une parmi une structure de cadre, une structure annulaire ou une structure en feuille.

11. Le bloc-batterie selon la revendication 1, dans lequel le bloc-batterie est configuré pour être connecté de manière amovible à l'outil électrique portatif.

12. Le bloc-batterie selon la revendication 1, dans lequel la cire de paraffine est modifiée par émulsification pour obtenir une cire de paraffine hydrosoluble, et la cire de paraffine hydrosoluble et le composant de mise en forme sont mélangés puis déshydratés pour obtenir le mélange de cire de paraffine.
